# EUROPÄISCHE PATENTANMELDUNG

(11) **EP 1 097 637 A1**
(43) Veröffentlichungstag der Anmeldung: **09.05.2001**
(21) Anmeldenummer: 99121674.8
(22) Anmeldetag: 02.11.1999
(51) Int. Cl.: A01M 7/00, A01C 23/04, B01F 5/00

(54) **Einspülvorrichtung**

(71) Anmelder: Maschinenfabrik Rau GmbH, D-73235 Weilheim (DE)
(72) Erfinder: Stahli, Walter, 72622 Nürtingen (DE); Hesse, Andreas, 73230 Kirchheim (DE)
(74) Vertreter: Manitz, Finsterwald & Partner

(57) **Zusammenfassung**

Einspülvorrichtung zum Einspülen von Substanzen wie Dünge- oder Pflanzenschutzmittel in Tanks, insbesondere Tanks von Ausgabevorrichtungen für Dünge- oder Pflanzenschutzmittel, mit einem Einspülbehälter (1) mit einer den Aufnahmeraum (2) des Behälters (1) umfassenden Behälterwand (3) und einem an die Behälterwand (3) anschließenden Boden (4) sowie einem im Bereich des oberen Endes der Behälterwand (3) angeordneten Zulaufanschluß (9) zum Zuführen von Einspülflüssigkeit in den Behälter (1) und einem im Bodenbereich des Behälters (1) angeordneten Ablaufanschluß (12) zum Abführen, insbesondere Absaugen der Einspülflüssigkeit samt aufgenommener Substanz aus dem Behälter (1), wobei zur Gewährleistung einer vollständigen automatischen Entleerung des Behälters (1) im oberen Endbereich der Behälterwand (3) eine nach unten offene, längs der Behälterwand (3) verlaufende Führungsrinne (5) für die Einspülflüssigkeit vorgesehen ist, in welche der Zulaufanschluß (9) mündet.

## Beschreibung

Die vorliegende Erfindung betrifft eine Einspülvorrichtung zum Einspülen von Substanzen wie Dünge- oder Pflanzenschutzmittel in Tanks, insbesondere in Tanks von Ausgabevorrichtungen für Dünge- oder Pflanzenschutzmittel, mit einem Einspülbehälter mit einer den Aufnahmeraum des Behälters umfassenden Behälterwand und einem an die Behälterwand anschließenden Boden sowie einem im Bereich des oberen Endes der Behälterwand angeordneten Zulaufanschluß zum Zuführen von Einspülflüssigkeit in den Behälter und einem im Bodenbereich des Behälters angeordneten Ablaufanschluß zum Abführen, insbesondere Absaugen der Einspülflüssigkeit samt aufgenommener Substanz aus dem Behälter.

Einspülvorrichtungen der genannten Art dienen beispielsweise dazu, den Tanks von fahrbaren Spritzeinrichtungen Produkte wie Dünge- oder Pflanzenschutzmittel zuzuführen. Die Einspülvorrichtungen sind dabei bevorzugt in einem unteren Bereich der Spritzeinrichtungen angeordnet und daher leichter zu befüllen als die Tanks, die nur von oben her zugänglich sind. Das Einspülen erfolgt dadurch, daß dem Behälter nach Einfüllen der einzuspülenden Substanz Einspülflüssigkeit, beispielsweise Frischwasser, über den Zulaufanschluß zugeführt und samt aufgenommener Substanz über den Ablaufanschluß abgeführt und in den Tank geleitet wird. Die Zu-und Abfuhr der Einspülflüssigkeit zu der Einspülvorrichtung kann dabei bevorzugt jeweils über eine Pumpe erfolgen.

Wichtig beim Einspülen ist es, daß das einzuspülende Produkt vollständig von der Einspülflüssigkeit aufgenommen und dem Tank zugeführt wird, damit keine Reste der Substanz in der Einspülvorrichtung verbleiben. Bei einer bekannten Einspülvorrichtung der genannten Art ist daher ein im oberen Endbereich der Behälterwand längs der Behälterwand umlaufendes Rohr vorgesehen, welches Löcher aufweist und an den Zulaufanschluß angeschlossen ist. Die Einspülflüssigkeit wird so um den Behälter herumgeführt und rieselt auf allen Seiten an der Behälterwand herab. Nachteilig hierbei ist, daß die Behälterwand in den zwischen den Löchern gelegenen Bereichen nicht ausreichend abgespült wird, so daß hier Rückstände der Substanz verbleiben können, insbesondere wenn es sich um pulverförmige oder körnige Substanzen handelt. Die Einspülvorrichtung muß daher nach beendetem Einspülvorgang von Hand gereinigt werden. Dies ist umständlich und zeitaufwendig.

Der Erfindung liegt die Aufgabe zugrunde, eine Einspülvorrichtung der eingangs genannten Art anzugeben, welche diese Nachteile nicht aufweist. Insbesondere soll eine vollständige automatische Entleerung der Einspülvorrichtung gewährleistet werden.

Diese Aufgabe wird dadurch gelöst, daß im oberen Endbereich der Behälterwand eine nach unten offene, längs der Behälterwand verlaufende Führungsrinne für die Einspülflüssigkeit vorgesehen ist, in welche der Zulaufanschluß mündet.

Durch die Verwendung einer nach unten offenen, im oberen Endbereich der Behälterwand längs dieser verlaufenden Führungsrinne für die Einspülflüssigkeit ergießt sich die Einspülflüssigkeit breitflächig über die Behälterwand und nimmt die einzuspülende Substanz vollständig mit.

Bevorzugt ist die Rinne rings um den ganzen Behälter herum umlaufend ausgebildet. Dadurch ist gewährleistet, daß die Einspülflüssigkeit weitgehend gleichmäßig über die gesamte Behälterwand fließt. Insbesondere in der Endphase des Einspülvorganges wird dadurch gewährleistet, daß die Substanz überall von der Behälterwand abgespült und somit der Behälter vollständig entleert wird. Ein umständliches und zeitaufwendiges Reinigen des Einspülbehälters kann damit vermieden werden.

Nach einer weiteren Ausgestaltung der Erfindung ist der obere Rand der Behälterwand zur Bildung der Rinne nach innen, insbesondere U-profil-förmig, umgebogen ausgebildet. Diese einstückige Ausgestaltung von Behälterwand und Rinne ist herstellungstechnisch unaufwendig und kostengünstig. Auch werden etwaige Nischen vermieden, in denen sich Reste der einzuspülenden Substanz festsetzen könnten.

Der Zulaufanschluß ist bevorzugt so ausgebildet, daß die Einspülflüssigkeit ohne Richtungsänderung in die Führungsrinne einströmt. Damit wird eine gute Verteilung erreicht.

Nach einer weiteren Ausgestaltung der Erfindung ist beim Zulaufanschluß eine Verteilvorrichtung vorgesehen, durch welche die einströmende Einspülflüssigkeit in zwei in entgegengesetzten Richtungen in der Rinne flie-ßende Ströme aufgeteilt wird. Hierdurch wird ein besonders gleichmäßiges Herabströmen der Einspülflüssigkeit über die gesamte Behälterwand und damit eine gute Mitnahme der einzuspülenden Substanz gewährleistet.

Die Einspülflüssigkeit kann dabei entweder gleichmäßig oder ungleichmäßig auf die beiden Ströme aufgeteilt werden. Durch eine ungleichmäßige Aufteilung kann auch bei einer asymmetrischen Anordnung des Zulaufanschlusses eine gleichmäßige Verteilung der Einspülflüssigkeit gewährleistet werden.

Als Verteilvorrichtung kann beispielsweise ein T-Stück vorgesehen sein, welches den Zulaufanschluß bildet. Eine andere Möglichkeit besteht darin, den dem Zulaufanschluß gegenüberliegenden Abschnitt der Rinne als Verteilvorrichtung auszubilden. Das heißt, der Zulaufanschluß wird so ausgebildet, daß die einströmende Einspülflüssigkeit auf den Rinnenabschnitt prallt und von ihm in zwei Teilströme aufgeteilt wird.

Der Zulaufanschluß kann nach einer weiteren Ausgestaltung der Erfindung eine Zulaufdüse umfassen. Hierdurch kann die Strömungsgeschwindigkeit der Einspülflüssigkeit vorteilhafterweise erhöht werden, so daß auch über die vom Zulaufanschluß entfernten Abschnitte der Behälterwand ausreichend Einspülflüssigkeit breitflächig herabfließt, um dort vorhandene Substanz vollständig mitzunehmen.

Die Behälterwand ist bevorzugt in Strömungsrichtung der Einspülflüssigkeit gerundet ausgebildet, insbesondere mit Krümmungsradien größer 30 mm. Die Verteilung der Einspülflüssigkeit über die gesamte Behälterwand wird dadurch verbessert.

Herstellungstechnisch günstig ist die Verwendung von Kunststoff für den Behälter. Dieser kann bevorzugt einstückig ausgebildet sein.

Schließlich ist es bevorzugt, den Behälter mit einem Deckel zu versehen. Ein mögliches Herausspritzen von Flüssigkeit beim Reinigen des Behälters wird dadurch vermieden.

Ein Ausführungsbeispiel der Erfindung ist in der Zeichnung dargestellt und wird nachfolgend beschrieben. Es zeigen, jeweils in schematischer Darstellung:

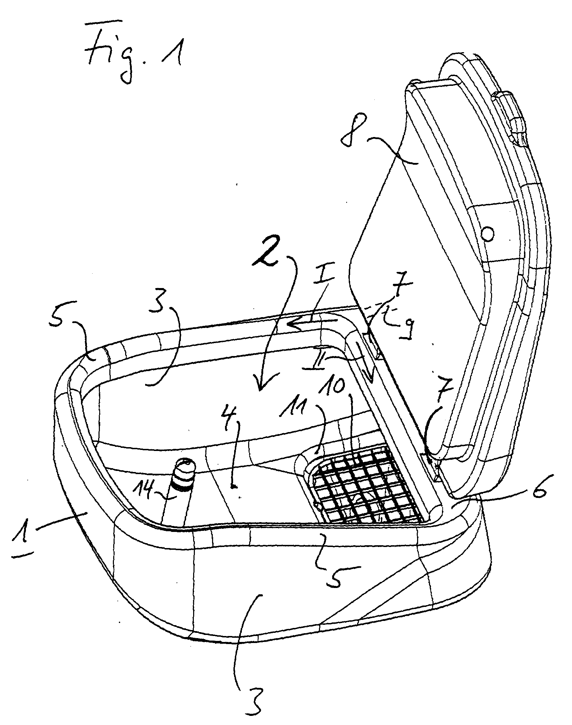

- Figur 1: eine perspektivische Ansicht einer erfindungsgemäßen Einspülvorrichtung und

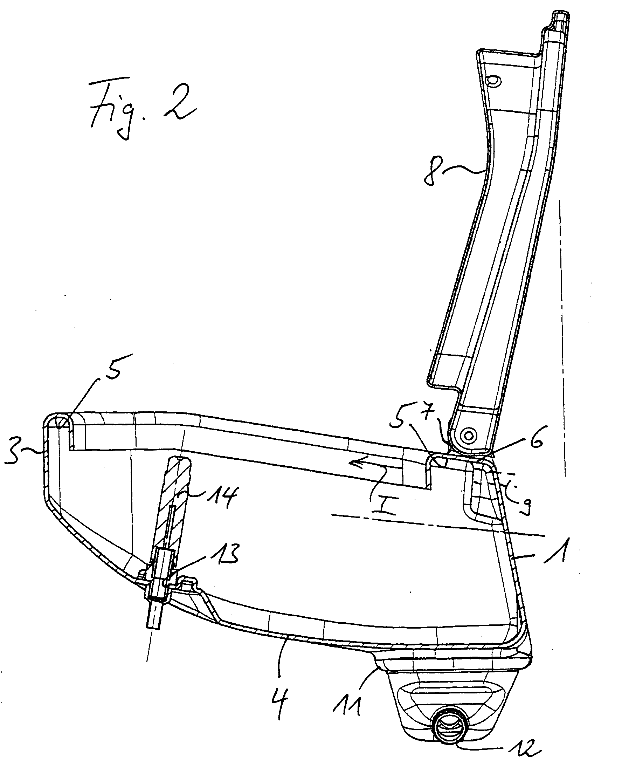

- Figur 2: einen Vertikalschnitt durch die Einspülvorrichtung von Figur 1.

Die dargestellte Einspülvorrichtung umfaßt einen Einspülbehälter 1 mit einer den Aufnahmeraum 2 zur Aufnahme der einzuspülenden Substanz umfassenden Behälterwand 3 und einem an die Behälterwand 3 anschließenden Boden 4. Der Behälter 1 ist dabei im wesentlichen quaderförmig ausgebildet, weist jedoch abgerundete Eckbereiche auf.

Die Behälterwand 3 ist an ihrem oberen Ende nach innen umgebogen und bildet dadurch eine um den Behälter 1 umlaufende Rinne 5. An einer Seite des Behälters 1 ist der nach oben weisende Abschnitt 6 der nach innen umgebogenen Behälterwand 3 breiter ausgebildet als auf den übrigen Seiten des Behälters. An diesem breiteren Abschnitt 6 sind zwei nach oben weisende Laschen 7 angeformt, an welche ein Deckel 8 schwenkbar angelenkt ist.

In einem oberen Eckbereich zwischen der Behälterseite mit dem breiteren Abschnitt 6 und einer benachbarten Seite ist ein Zulaufanschluß 9 vorgesehen, der in die Rinne 5 mündet. Der Zulaufanschluß 9 ist dabei so ausgebildet, daß über diesen zugeführte Einspülflüssigkeit ohne Richtungsänderung in die Rinne 5 strömt, gegen den gegenüberliegenden Abschnitt der Rinne 5 prallt und dadurch in zwei Teilströme aufgeteilt wird, die in entgegengesetzten Richtungen gemäß der Pfeile I und II längs der Rille 5 um den Behälter 1 herum fließen.

Im Boden 4 des Behälters 1 ist eine durch ein Gitter 10 abgedeckte Senke 11 ausgebildet, die in einen Ablaufanschluß 12 mündet. Im übrigen ist der Boden 4 mit einer leichten Neigung ausgebildet, so daß sich im Behälter 1 vorhandene Flüssigkeit in der Senke 11 sammelt. In einem von der Senke 11 entfernten Bereich weist der Boden 4 außerdem eine Durchtrittsöffnung 13 auf, in welche eine Reinigungsdüse 14 eingesetzt ist. An die Reinigungsdüse 14 ist in bekannter Weise eine Leitung für eine Reinigungsflüssigkeit, insbesondere Frischwasser anschließbar.

Zur Verwendung der erfindungsgemäßen Einspülvorrichtung wird der Behälter 1 über den Zulaufanschluß 9 an eine Leitung für Einspülflüssigkeit, insbesondere an eine Frischwasserleitung angeschlossen. Der Ablaufanschluß 12 wird an eine weitere Leitung angeschlossen, die zu dem Tank führt, in den die Substanz eingespült werden soll. Beide Leitungen führen bevorzugt jeweils über eine Pumpeinrichtung.

Soll nun eine Substanz in den Tank eingespült werden, so wird zunächst bei geöffnetem Deckel 8 Einspülflüssigkeit über den Zulaufanschluß 9 dem Behälter 1 zugeführt. Die einzuspülende Substanz wird in den Aufnahmeraum 2 gegeben, wo sie von der Einspülflüssigkeit erfaßt und über den Ablaufanschluß 12 abgeführt und dem Tank zugeleitet wird. Die Einspülflüssigkeit strömt in den beiden Richtungen I und II längs der Rinne 5 um den Behälter 1 herum und fließt breitflächig die Behälterwand 3 herab. Dabei nimmt sie die dort vorhandene Substanz mit und führt diese in die Senke 11 und zu dem Ablaufanschluß 12. Von dort gelangt die Substanz mit der Einspülflüssigkeit in den Tank.

Durch die Verteilung der Einspülflüssigkeit über die nach unten offene Rinne 5 und das breitflächige Herabfließen über die Behälterwand 3 wird insbesondere in der Endphase des Einspülvorganges gewährleistet, daß alle an der Behälterwand 3 haftende Substanz von der Einspülflüssigkeit mitgenommen und der Behälter 1 vollständig entleert wird. Ein anschließendes Reinigen des Behälters 1 von Hand ist daher in der Regel nicht erforderlich. Mit der Reinigungsdüse 14 können auf Wunsch in bekannter Weise Pflanzenschutzmittelgebinde, an denen Substanz haftet, gereinigt werden. Außerdem kann auch im Bedarfsfall bei geschlossenem Deckel 8 der Behälter 1 innenseitig abgespült werden.

### Bezugszeichenliste

- 1: Behälter
- 2: Aufnahmeraum
- 3: Behälterwand
- 4: Boden
- 5: Rinne
- 6: Abschnitt von 5
- 7: Lasche
- 8: Deckel
- 9: Zulaufanschluß
- 10: Gitter
- 11: Senke
- 12: Ablaufanschluß
- 13: Durchtrittsöffnung
- 14: Reinigungsdüse
- I: Strömungsrichtung
- II: Strömungsrichtung

## Patentansprüche

1. Einspülvorrichtung zum Einspülen von Substanzen wie Dünge- oder Pflanzenschutzmittel in Tanks, insbesondere Tanks von Ausgabevorrichtungen für Dünge- oder Pflanzenschutzmittel, mit einem Einspülbehälter (1) mit einer den Aufnahmeraum (2) des Behälters (1) umfassenden Behälterwand (3) und einem an die Behälterwand (3) anschließenden Boden (4) sowie einem im Bereich des oberen Endes der Behälterwand (3) angeordneten Zulaufanschluß (9) zum Zuführen von Einspülflüssigkeit in den Behälter (1) und einem im Bodenbereich des Behälters (1) angeordneten Ablaufanschluß (12) zum Abführen, insbesondere Absaugen der Einspülflüssigkeit samt aufgenommener Substanz aus dem Behälter (1),
dadurch gekennzeichnet,
daß im oberen Endbereich der Behälterwand (3) eine nach unten offene, längs der Behälterwand (3) verlaufende Führungsrinne (5) für die Einspülflüssigkeit vorgesehen ist, in welche der Zulaufanschluß (9) mündet.

2. Einspülvorrichtung nach Anspruch 1,
dadurch gekennzeichnet,
daß die Rinne (5) rings um den gesamten Behälter (1) herum umlaufend ausgebildet ist.

3. Einspülvorrichtung nach Anspruch 1,
dadurch gekennzeichnet,
daß der obere Rand der Behälterwand (3) zur Bildung der Rinne (5) nach innen, insbesondere U-profilförmig, umgebogen ausgebildet ist.

4. Einspülvorrichtung nach einem der vorhergehenden Ansprüche,
dadurch gekennzeichnet,
daß der Zulaufanschluß so ausgebildet ist, daß die Einspülflüssigkeit ohne Richtungsänderung in die Führumgrinne (5) einströmt.

5. Einspülvorrichtung nach einem der vorhergehenden Ansprüche,
dadurch gekennzeichnet,
daß beim Zulaufanschluß (9) eine Verteilvorrichtung vorgesehen ist, durch welche die einströmende Einspülflüssigkeit in zwei in entgegengesetzten Richtungen (I, II) in der Rinne (5) fließende Ströme aufgeteilt wird.

6. Einspülvorrichtung nach Anspruch 5,
dadurch gekennzeichnet,
daß als Verteilvorrichtung ein T-Stück vorgesehen ist, welches den Zulaufanschluß (9) bildet.

7. Einspülvorrichtung nach Anspruch 5,
dadurch gekennzeichnet,
daß der dem Zulaufanschluß (9) gegenüberliegende Abschnitt der Rinne (5) als Verteilvorrichtung ausgebildet ist.

8. Einspülvorrichtung nach einem der vorhergehenden Ansprüche,
dadurch gekennzeichnet,
daß der Zulaufanschluß (9) eine Zulaufdüse umfaßt.

9. Einspülvorrichtung nach einem der vorhergehenden Ansprüche,
dadurch gekennzeichnet,
daß die Behälterwand (3) in Strömungsrichtung der Einspülflüssigkeit gerundet ausgebildet ist, insbesondere mit Krümmungsradien größer 30 mm.

10. Einspülvorrichtung nach einem der vorhergehenden Ansprüche,
dadurch gekennzeichnet,
daß der Behälter einen Deckel (8) aufweist.
